# EUROPÄISCHE PATENTSCHRIFT

(11) **EP 1 470 001 B1**
(45) Veröffentlichungstag und Bekanntmachung des Hinweises auf die Patenterteilung: **24.12.2008**
(21) Anmeldenummer: 03708064.5
(22) Anmeldetag: 17.01.2003
(51) Int. Cl.: B42D 15/10

(54) **Sicherheitselement mit Farbkippeffekt und magnetischen Eigenschaften sowie Verfahren zur Herstellung**
Security element with flip-flop color change effect and magnetic properties and method for producing
Elément de sécurité à effet chatoyant et propriétés magnétiques et procédé de fabrication

(30) Priorität: 18.01.2002 DE 10202035
(43) Veröffentlichungstag der Anmeldung: 27.10.2004
(73) Patentinhaber: Giesecke & Devrient GmbH, 81677 München (DE)
(72) Erfinder: HEIM, Manfred, 81543 München (DE)
(74) Vertreter: Klunker . Schmitt-Nilson . Hirsch
(86) Internationale Anmeldenummer: PCT/EP2003/000447
(87) Internationale Veröffentlichungsnummer: WO 2003/059644

(56) Entgegenhaltungen:
- EP-A- 0 341 002
- EP-A- 0 756 945
- WO-A-01/03945
- WO-A-02/073250
- US-A- 4 705 300

## Beschreibung

Die Erfindung betrifft ein Sicherheitselement für Gegenstände im Allgemeinen und für Wertdokumente im Besonderen, wie beispielsweise Banknoten, Kreditkarten. Die Erfindung betrifft des Weiteren mit einem solchen Sicherheitselement ausgerüstete Gegenstände sowie Verfahren zur Herstellung des Sicherheitselements und der Gegenstände. Bei den Gegenständen kann es sich auch um Halbzeuge für die Weiterverarbeitung handeln, beispielsweise um unbedrucktes Banknotenpapier.

Um die Authentizität von Gegenständen nachweisen und Gegenstände von Fälschungen unterscheiden zu können, werden diese mit komplexen, fälschungssicheren, visuell und/oder maschinell prüfbaren Sicherheitselementen ausgestattet. Besonders schützenswerte Gegenstände sind Wertdokumente, insbesondere Banknoten, Schecks, Scheckkarten, Kreditkarten, Ausweise, Pässe, Eintrittskarten, Fahrkarten.

Je komplexer die Sicherheitselemente sind und je aufwändiger ihre Herstellung ist, desto höher ist der Fälschungsschutz. In einem Sicherheitselement sind häufig mehrere unterschiedliche Sicherheitsmerkmale vereint, die teilweise verborgen und daher nur maschinenlesbar oder mittels zusätzlicher Apparatur erkennbar sind und die teilweise mit bloßem Auge erkennbar sind, um eine visuelle Prüfung zu ermöglichen. Die Kombination mehrerer Sicherheitsmerkmale in einem Sicherheitselement ist nicht immer ohne weiteres möglich und bisweilen mit Kompromissen verbunden, die dazu führen, dass einzelne Sicherheitsmerkmale nicht mehr ihre optimale Wirkung entfalten.

Aus der WO 01/03945 A1 ist beispielsweise ein mehrschichtiges Sicherheitselement für Sicherheitsdokumente, Banknoten und Kreditkarten bekannt, welches eine Schicht mit geprägten Beugungsstrukturen und eine Color-Shift- bzw. Farbkippeffektschicht miteinander kombiniert. Unter Farbkippeffekt wird dabei der Effekt des Farbwechsels unter verschiedenen Betrachtungswinkeln verstanden. Jedes dieser beiden Sicherheitsmerkmale bietet einen effektiven Kopierschutz und weist visuell einfach zu prüfende optische Effekte auf. Außerdem sind beide Sicherheitsmerkmale nur mit großem Aufwand nachahmbar. Die optische Wirkung von Prägehologrammen wird wesentlich verstärkt, wenn die Beugungsstrukturen vor einem reflektierenden Hintergrund betrachtet werden, und auch die Farbkippeffekte treten vor einem spiegelnd reflektierenden Hintergrund besonders intensiv hervor. In der WO 01/03945 A1 wird daher u.a. vorgeschlagen, die mit Beugungsstrukturen versehene Schicht und die Farbkippeffektschicht mit einer gemeinsamen, reflektierenden Metallhintergrundschicht zu kombinieren. Diese reflektierende Metallhintergrundschicht kann zusätzlich magnetische Eigenschaften besitzen, so dass ein weiteres drittes magnetisches Sicherheitsmerkmal in dem Sicherheitselement integriert ist.

Problematisch bei einer reflektierenden Hintergrundbeschichtung mit magnetischen Eigenschaften ist die Tatsache, dass magnetische Materialien in der Regel schlechte Reflexionseigenschaften besitzen. Solche mit akzeptablen Reflexionseigenschaften besitzen wiederum weniger ausgeprägte magnetische Eigenschaften. In der EP 0 341 002 B1 wird eine Dünnschichtstruktur mit einer Farbkippeffektschicht und einer magnetischen Metallhintergrundbeschichtung aus einer Kobalt-Nickel-Legierung als Sicherheitselement vorgeschlagen. Eine solche Hintergrundbeschichtung soll sowohl annehmbare Reflexionseigenschaften als auch gute magnetische Eigenschaften besitzen. Nichtdestoweniger sind die Reflexionseigenschaften nicht optimal.

Das am 19.09.2002 nach veröffentlichte Dokument WO-A-02/073250 offenbart ein Sicherheitselement mit folgenden, übereinander liegenden Schichten einer magnetischen Schicht, einer Reflexionsschicht und einem, einen Farbkippeffekt erzeugenden Interferenzelement.

Aufgabe der vorliegenden Erfindung ist es daher, ein verbessertes mehrschichtiges Sicherheitselement mit optimiertem, d.h. intensivem Farbkippeffekt bzw. Color-Shift-Effekt und mit gleichzeitig optimierten magnetischen Eigenschaften, einen mit einem solchen Sicherheitselement versehenen Gegenstand und Verfahren zur Herstellung des Sicherheitselements und des Gegenstands vorzuschlagen.

Diese Aufgabe wird erfindungsgemäß durch ein Sicherheitselement sowie einen Gegenstand und Verfahren gemäß den unabhängigen Ansprüchen gelöst. In davon abhängigen Ansprüchen sind vorteilhafte Ausgestaltungen und Weiterbildungen der Erfindung angegeben.

Demnach besitzt das mehrschichtige Sicherheitselement einen Interferenzschichtaufbau, der einen Farbkippeffekt erzeugt, wenn das Sicherheitselement unter verschiedenen Winkeln betrachtet wird, und eine Schicht mit magnetischen Eigenschaften. Der Interferenzschichtaufbau setzt sich dabei aus einem mehrschichtigen Interferenzelement I und einer Reflexionsschicht R zusammen. Das Interferenzelement, die Reflexionsschicht und die Schicht mit magnetischen Eigenschaften sind dabei so angeordnet, dass die Reflexionsschicht zwischen dem Interferenzelement und der Schicht mit den magnetischen Eigenschaften liegt. Bei der Reflexionsschicht handelt es sich üblicherweise um eine reflektierende Metallschicht. Die Schicht mit magnetischen Eigenschaften und die Reflexionsschicht besitzen Aussparungen in Form von Zeichen oder Mustern oder Codierungen.

Das Interferenzelement wird durch übereinander liegende Absorber- und Dielektrikumschichten gebildet, wobei auch mehrere Absorber- und Dielektrikumschichten abwechselnd übereinander angeordnet sein können. Anstelle von alternierenden Absorber- und Dielektrikumschichten können auch ausschließlich Dielektrikumschichten vorgesehen sein, wobei aneinander grenzende Schichten stark unterschiedliche Berechnungsindices besitzen, damit ein Farbkippeffekt erzeugt wird. Die Verwendung von Absorberschichten ist jedoch vorteilhaft, weil die Farbkippeffekte besser sichtbar sind.

Optische Interferenzbeschichtungen mit Farbkippeffekt sind vielfach bekannt und werden im Zusammenhang mit Sicherheitselementen beispielsweise beschrieben in EP 0 395 410 B1, EP 0 341002 B1, WO 01/03945 A1 und US 3,858,977. Ihre besondere Eigenschaft besteht darin, dass sie bei unterschiedlichen Betrachtungswinkeln unterschiedliche Farbeindrücke vermitteln. Je nach Art und Anzahl der Schichten im Schichtaufbau können zwei, drei, vier oder mehr vom Betrachtungswinkel abhängige unterschiedliche Farbwirkungen auftreten. Die Reflexions- und Transmissionseigenschaften solcher Farbkippeffektschichten hängen von mehreren Faktoren ab, insbesondere von den Berechnungsindices, Absorptionskoeffizienten und Schichtdicken sowie der Schichtanzahl des Schichtaufbaus.

Erfindungsgemäß werden die einzelnen Schichten des optischen Interferenzelements sowie die reflektierende Metallschicht und die Schicht mit magnetischen Eigenschaften einander zumindest teilweise überdeckend auf ein Substrat aufgebracht, vorzugsweise aufgedampft. Wesentlich ist dabei, dass die reflektierende Metallschicht zwischen der Schicht mit magnetischen Eigenschaften und dem Interferenzelement angeordnet ist, damit die Reflexionsschicht ihre positive optische Wirkung als Hintergrund zum Interferenzelement ausüben kann.

Das mehrschichtige Sicherheitselement kann mit oder ohne das Substrat auf einen Gegenstand appliziert werden, beispielsweise im Hot-Stamp-Verfahren. Im Falle der Übertragung ohne das Substrat wird das mehrschichtige Sicherheitselement auf einer Substratseite erzeugt, wobei die Schichtreihenfolge Substrat/Interferenzelement/Reflexionsschicht/Magnetschicht oder Substrat/ Magnetschicht/ Reflexionsschicht/ Interferenzelement sein kann. Wird das Sicherheitselement zusammen mit dem Substrat auf einen Gegenstand aufgebracht oder in einen Gegenstand integriert, beispielsweise als Etikett auf oder als Fensterfaden in einer Banknote, so kann die Magnetschicht auch auf der Rückseite des Substrats vorliegen.

Das erfindungsgemäß aufgebaute Sicherheitselement weist eine Negativ- oder Positivschrift durch lokales Entfernen der Reflexionsschicht und der Magnetschicht auf. Bei der Schrift handelt es sich vorzugsweise um alphanumerische Zeichen, ist aber darauf nicht beschränkt. Im Sinne der Erfindung kann es sich um jedes darstellbare Zeichen, Muster oder Codierung handeln. Zusätzlich können Beugungsstrukturen auf oder in dem Substrat, auf dem die Schichten hergestellt werden, oder auf bzw. in einer separaten Schicht, beispielsweise einer geprägten Lackschicht, vorliegen.

Durch lokales Entfernen der magnetischen Schicht und der Reflexionsschicht wird das Sicherheitselement je nach Ausgestaltung der einzelnen Schichten partiell transparent bzw. semitransparent, da das Interferenzelement transparent bzw. semitransparent ist. Unter "Semitransparenz" ist hierbei Transluzenz zu verstehen, d.h. ein transluzentes Sicherheitselement weist eine Lichtdurchlässigkeit von unter 90 %, vorzugsweise zwischen 80 % und 20 % auf. Bei Verwendung eines solchen partiell semitransparenten Sicherheitselements, beispielsweise als Sicherheitsfaden in einer Banknote, ergibt sich ein Auflicht-/Durchlichteffekt. Das heißt, die Zeichen, Muster und Codierungen des in der Banknote eingelagerten Sicherheitsfadens sind im Auflicht nicht wahrnehmbar, treten aber bei Betrachtung im Durchlicht deutlich als hellere Bereiche gegenüber einer dunklen Umgebung hervor.

Das erfindungsgemäße Sicherheitselement ist besonders geeignet zur Kombination mit Beugungsstrukturen zur Erzeugung weiterer Farbeffekte. Bei den Beugungsstrukturen handelt es sich beispielsweise um Gitterstrukturen, Refraktionsmuster, Reflexions-, Transmissions- oder Volumenhologramme. Die Beugungsstrukturen können beispielsweise direkt als Prägungen in dem die Schichten tragenden Substrat vorliegen, beispielsweise im Trägermaterial eines Kunststofffadens, oder aber in eine zusätzliche Schicht eingebracht sein. Bei der zusätzlichen Schicht kann es sich z.B. um eine Lackschicht handeln. Die damit erzielten Farbeffekte beruhen auf einer Beugung des Lichts an den geprägten Reliefstrukturen. Die intensivste optische Wirkung entfalten solche Beugungsstrukturen vor einem reflektierenden metallischen Hintergrund. Das erfindungsgemäße Sicherheitselement besitzt bereits eine reflektierende Metallschicht, die daher ohne weiteres auch als reflektierender metallischer Hintergrund für die Beugungsstruktur dienen kann.

Die metallische Reflexionsschicht kann beispielsweise aus Aluminium, Silber, Nickel, Platin oder Palladium bestehen, vorzugsweise aus Aluminium oder Silber. Beide Materialien sind elektrisch leitfähig, so dass die elektrische Leitfähigkeit des Sicherheitselements als zusätzliches Sicherheitsmerkmal berücksichtigt werden kann.

Nachfolgend wird die Erfindung beispielhaft anhand der begleitenden Zeichnungen beschrieben. Die in den Figuren gezeigten Proportionen entsprechen nicht unbedingt den in der Realität vorliegenden Verhältnissen und dienen vornehmlich zur Verbesserung der Anschaulichkeit. Darin zeigen:
- Figur 1: die Schichtreihenfolge eines Sicherheitselements schematisch;
- Figur 2 - 6: den Schichtaufbau eines Sicherheitselements in Kombination mit einem an unterschiedlichen Stellen des Schichtaufbaus an- geordneten Substrats mit geprägten Beugungsstrukturen;
- Figur 7: den Schichtaufbau eines Sicherheitselements gemäß Figur 4 mit Aussparungen in der magnetischen Schicht und der Reflexions- schicht;
- Figur 8: ein Halbzeug mit mehreren, zusammenhängenden Sicherheits- elementen in Draufsicht mit einem Schichtaufbau entsprechend Figur 7; und
- Figur 9: einen in eine Banknote als Fensterfaden eingelagerten Sicher- heitsfaden im Querschnitt.

Die technischen Erläuterungen zu den einzelnen Figuren sind nicht auf die dort jeweilig gezeigten Ausführungsformen beschränkt, sondern gelten auch zur Erläuterung des allgemeinen Erfindungsgedankens.

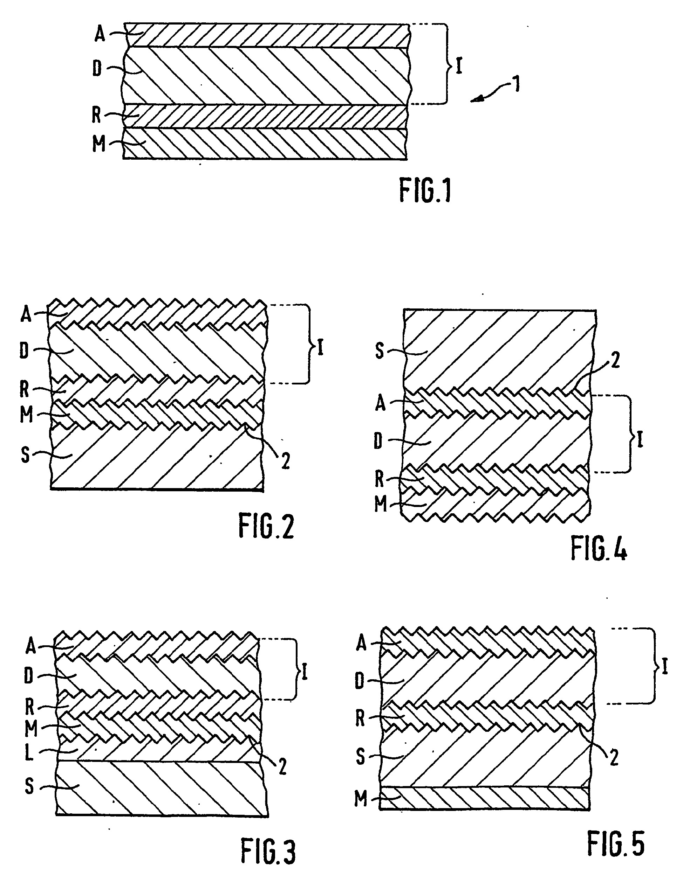

Figur 1 zeigt ausschnittsweise im Querschnitt den Schichtaufbau eines Sicherheitselements 1. Der Schichtaufbau mit Farbkippeffekt bzw. Color-Shift-Effekt umfasst ein mehrschichtiges Interferenzelement I, eine Schicht M mit magnetischen Eigenschaften und eine zwischen dem Interferenzelement I und der Schicht M mit magnetischen Eigenschaften liegende Reflexionsschicht R. Ein solches Sicherheitselement 1 wird in der Weise auf einen Gegenstand appliziert oder in einen Gegenstand integriert, dass das Interferenzelement I visuell erkennbar ist, das heißt dem Betrachter zugewandt ist.

Dies gilt für alle Ausführungsformen auch der Fig. 2 bis 7. Etwaige transparente oder semitransparente Schichten können durchaus noch über dem Interferenzelement I oder als Zwischenschichten vorgesehen sein.

Das Interferenzelement I ist wiederum mehrschichtig aufgebaut und umfasst mindestens zwei Schichten, nämlich im Ausführungsbeispiel gemäß Figur 1 eine Absorberschicht A und eine darunter liegende Dielektrikumschicht D. Die dem Fachmann grundsätzlich bekannten physikalischen Wirkungen der einzelnen Schichten innerhalb des Interferenzschichtaufbaus, bestehend aus Reflexionsschichten und Interferenzelementen, bei der Erzeugung des Farbkippeffekts sind beispielsweise in der EP 0 395 410 B1 beschrieben. Als Absorberschicht A dient typischerweise eine Metallschicht aus Materialien wie Chrom, Eisen, Gold oder Titan in einer Dicke von vorzugsweise 4 nm bis 20 nm. Als Absorberschichtenmaterialien können auch Verbindungen, wie Nikkel-Chrom-Eisen, aber auch Metalle, wie Vanadium, Palladium oder Molybdän verwendet werden. Weitere geeignete Materialien für die Absorberschicht sind beispielsweise in der WO 01/03945 A1 angegeben, z.B. Nickel, Cobalt, Wolfram, Niobium, Aluminium, Metallverbindungen, wie Metallfluoride, -oxide, -sulfide, -nitride, -carbide, -phosphide, -selenide, -silicide und Verbindungen davon, aber auch Kohlenstoff, Germanium, Cermet, Eisenoxid.

Für die Dielektrikumschicht kommen hauptsächlich transparente Materialien mit einem niedrigen Berechnungsindex n (n< 1,*7*) in Betracht, wie beispielsweise SiO₂, MgF₂, SiOx mit 1 ≤x≤2 und Al₂O₃. Grundsätzlich kommen fast alle aufdampfbaren, durchsichtigen Verbindungen in Frage, insbesondere also auch höher brechende Beschichtungsmaterialien wie ZrO₂, ZnS, TiO₂ und Indiumzinnoxide (ITO). Weitere für Dielektrikumschichten geeignete Materialien sind beispielsweise in der WO 01/03945 A1 angegeben.

Die Schichtdicke der Dielektriumschicht D liegt üblicherweise im Bereich von 100 nm bis 1000 nm, bevorzugt 200 nm bis 500 nm.

Anstelle von Absorberschichten A können auch Dielektriumschichten D eingesetzt werden, wobei der Brechungsindex von aneinander grenzenden Dielektriumschichten D stark unterschiedlich sein muss, das heißt einerseits n < 1*,7* und andererseits n > 1*,7,* um einen deutlichen Farbkippeffekt hervorzurufen.

Bei der Reflexionsschicht R handelt es sich vorzugsweise um eine Metallschicht aus Silber oder Aluminium oder aus einem anderen stark spiegelnden Metall. Die Reflexionsschicht R ist für den gewünschten Farbkippeffekt von entscheidender Bedeutung. Je besser die Reflexionseigenschaften in der Reflexionsschicht R, desto auffälliger ist der Farbkippeffekt.

Bei der Schicht M mit magnetischen Eigenschaften handelt es sich vorzugsweise um eine magnetische Metallschicht aus Nickel, Eisen, Kobalt oder einer Legierung aus den genannten Metallen oder einer Legierung aus einem der genannten Metalle mit anderen Materialien, wobei mindestens eine der drei genannten Materialien einen Gewichtsanteil von mindestens 20% besitzt. Damit die magnetischen Eigenschaften der magnetischen Schicht M für eine maschinelle Prüfung ausreichend ausgeprägt sind, liegt die Dicke der magnetischen Schicht M vorzugsweise zwischen 10 nm und 1000 nm. Das Material der magnetischen Schicht M kann so gewählt werden, dass es die gewünschten magnetischen Eigenschaften besitzt. Insbesondere können Koerzitivfeldstärke und Remanenzeigenschaften optimal eingestellt werden, da die magnetische Schicht M keinerlei Reflexionsfunktion für das Interferenzelement I besitzt. Die magnetische Schicht M kann beispielsweise auch als Codierung, etwa als Barcode, vorliegen, ohne dass die optischen Eigenschaften des Sicherheitselements beeinträchtigt werden. Denn die magnetische Schicht M liegt für den Betrachter unsichtbar hinter der Reflexionsschicht R. Die optischen Eigenschaften und die magnetischen Eigenschaften des Sicherheitselements werden somit durch die Gegenwart der Reflexionsschicht R vollkommen voneinander entkoppelt.

Alle Schichten A, D, R, M werden vorzugsweise im Vakuumbedampfungsverfahren auf einem Substrat erzeugt, welches einen Bestandteil des Sicherheitselements 1 bilden kann, welches aber auch lediglich als Zwischenträger dienen kann und spätestens bei der Applikation des Sicherheitselements auf oder in einen Gegenstand entfernt wird. Unterschiedlichste Bedampfungsverfahren sind zur Erzeugung der Schichten geeignet, wobei eine methodische Gruppe die Physical Vapor Deposition (PVD) mit Schiffchenbedampfung, Bedampfung durch Widerstandsheizung und Bedampfung durch Induktionsheizung bildet. Aber auch Elektronenstrahlbedampfung, Sputtern (DC oder AC) und Lichtbogenbedampfung sind möglich. Andererseits kann die Bedampfung auch als Chemical Vapor Deposition (CVD) erfolgen oder durch Sputtern im reaktiven Plasma oder jede andere plasmaunterstützte Bedampfungsart. Neben Bedampfungsverfahren können, wenn möglich, Schichten auch aufgedruckt werden. So kann die magnetische Schicht unter Verwendung geeigneter Druckfarben in den Schichtaufbau eingebracht werden.

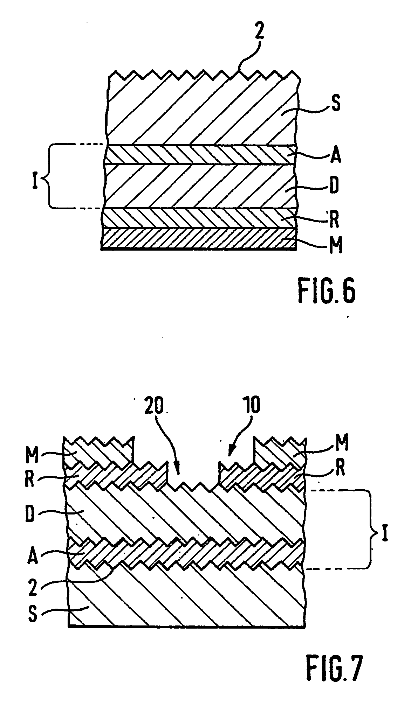

In den Figuren 2 bis 6 sind verschiedene mögliche Schichtaufbauten eines Sicherheitselements dargestellt, wobei ein Substrat S an unterschiedlichen Stellen in der Schichtreihenfolge I-R-M angeordnet ist. Demnach kann das Substrat S unter oder über den Schichten I, R, M liegen (Figuren 2, 3, 5). Es kann aber auch zwischen der Reflexionsschicht R und der magnetischen Schicht M liegen (Figur 5). Wenn das Substrat über dem Interferenzelement I (Figur 4, 6) liegt, ist es wichtig, dass das Substrat S möglichst transparent oder zumindest semitransparent ist, um die Intensität des Farbkippeffekts nicht negativ zu beeinflussen.

In das Sicherheitselement lassen sich besonders gut Beugungsstrukturen integrieren, die vorzugsweise im Substrat S integriert sind, die aber gegebenenfalls durch eine separate Schicht gebildet sein können. Dabei können sich die Beugungsstrukturen über das gesamte Sicherheitselement vollflächig erstrecken oder nur in Teilbereichen vorliegen.

In den Figuren 2, 4, 5 und 6 sind in eine Trägerfolie bzw. in das Substrat S Beugungsstrukturen 2 eingeprägt. Die in diesem Zusammenhang typischerweise vorhandene Metallbeschichtung zur Intensivierung des visuellen Eindrucks des Beugungsbildes ist in dem Sicherheitselement bereits durch die Reflexionsschicht R verkörpert und braucht daher nicht separat vorgesehen zu werden. Einen optimalen visuellen Eindruck eines Reflexionshologramms erhält man, wenn die Reflexionsschicht R unmittelbar an die Beugungsstruktur 2 angrenzt, wie in Figur 5 zu sehen ist. Bei einer geprägten Beugungsstruktur erfolgt der Prägevorgang vorzugsweise vor der Beschichtung des Substrats S. Liegt allerdings noch die Magnetschicht M zwischen der Reflexionsschicht R und dem geprägten Substrat S, wie in Figur 2 dargestellt, so nimmt die optische Qualität mit zunehmender Dicke der Magnetschicht M ab. In diesem Fall kann es vorteilhaft sein, die Beugungsstrukturen in die metallbeschichtete Substratoberfläche zu prägen.

Die geprägte Reliefstruktur kann auch von der Reflexionsschicht R beabstandet sein, sofern jedenfalls die Reflexionsschicht R für den Betrachter den Hintergrund zur geprägten Reliefstruktur 2 bildet, wie in den Figuren 4 und 6 gezeigt. Der optische Eindruck einer Reflexionsbeugungsstruktur mit beabstandeter Reflexionsschicht ist allerdings weniger brillant.

Anstatt der in das Substrat integrierten Beugungsstrukturen, können diese auch in einer separaten Schicht vorliegen. Fig. 3 zeigt einen mit Fig. 2 vergleichbaren Schichtaufbau, wobei zwischen dem Substrat und der Magnetschicht eine separate Schicht, hier eine Lackschicht L, vorliegt, in die Beugungsstrukturen 2 eingeprägt sind. Die geprägte Lackschicht könnte alternativ auch zwischen den Schichten M und R oder auf der Schicht A liegen.

Prinzipiell lassen sich Beugungsstrukturen zwischen alle Schichten bzw. auf die Außenseiten der äußeren Schichten einbringen, solange die Schichteinheit aus Interferenzelement I und Reflexionsschicht R nicht unterbrochen wird. Die Beugungsstrukturen bilden sich dabei in den nachfolgend aufgebrachten Schichten ab.

Die in dem Sicherheitselement vorhandene reflektierende Metallschicht R wird gemäß der Erfindung zur Erzeugung eines im Durchlicht sichtbaren Schriftzuges, Musters oder Codes unterbrochen, wobei die Magnetschicht im selben Bereich unterbrochen sein muss, um den Durchlichteffekt nicht zu behindern. Zur Herstellung eines solchen Sicherheitselements werden transparente oder zumindest semitransparente Kunststofffolien vollflächig mit einer Magnetschicht M und einer Reflexionsschicht R bedampft. In diese Schichten werden nach bekannten Verfahren (Waschverfahren, Ätzen, Funkenerosion) die Aussparungen in Form der gewünschten Schriftzeichen, Muster und Codierung eingebracht. Vorzugsweise wird das Waschverfahren eingesetzt, bei dem das Trägermaterial zunächst mit Waschfarbe im gewünschten Muster bedruckt wird. Anschließend erfolgt das Aufdampfen der Reflexionsschicht und Magnetschicht. Durch Waschen werden die über der Waschfarbe liegenden Schichten mit entfernt, so dass an dieser Stelle eine Aussparung erzeugt wird. Dem Fachmann sind zahlreiche Verfahren zur Erzeugung der Zeichen und Muster geläufig. Insbesondere können die Reflexionsschicht R und die Magnetschicht M auch separat aufgebracht und separat geätzt bzw. gewaschen werden, wenn beispielsweise die Aussparungen in der Magnetschicht M eine von den Zeichen, Mustern oder Codierungen in der Reflexionsschicht R abweichende Größe besitzen sollen.

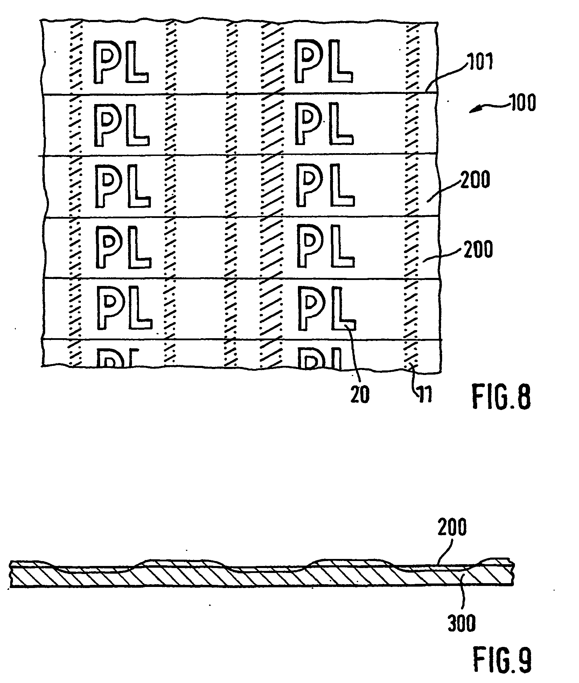

Dies ist beispielhaft in den Figuren 7 und 8 an einem Sicherheitselement mit einem Schichtaufbau gemäß Figur 4 dargestellt. Auf das Substrat S in Form einer Kunststoffolie mit geprägter Beugungsstruktur 2 ist das Interferenzelement I aufgedampft und angrenzend an das Interferenzelement I zunächst die Reflexionsschicht R und dann die Magnetschicht M. Die Reflexionsschicht R besitzt Aussparungen 20 in Form eines sich wiederholenden Schriftzuges "PL", wie in Figur 8 zu sehen. Die Aussparungen 10 in der Magnetschicht M sind wesentlich größer als die Aussparungen 20 in der Reflexionsschicht R und bilden einen magnetischen Strich-Code 11, wie ebenfalls in Fig. 8 zu sehen. Der Code kann je nach Ausführungsform in den Positiv- oder Negativmustern, d.h. in den magnetischen Bereichen oder den Aussparungen zu sehen sein.

Figur 8 zeigt ein Zwischenprodukt 100 in Draufsicht zur Herstellung zahlreicher Sicherheitselemente 1 in Form von Sicherheitsfäden 200 mit dem in Figur 7 dargestellten Querschnitt. Die Aussparungen 20 in Form von Schriftzeichen "PL" sind durch das Interferenzelement I und das transparente Trägermaterial bzw. Substrat S hindurch erkennbar. Die hinter der Reflexionsschicht R liegende und daher in Aufsicht nicht erkennbare Magnetschicht M liegt nur in Teilbereichen 11 vor, die einen Barcode bilden und in Figur 8 strichpunktiert angedeutet sind.

Das in Figur 8 dargestellte Zwischenprodukt 100 wird in einem nachfolgenden Verfahrensschritt entlang der Trennlinien 101 aufgetrennt, um Sicherheitsfäden 200 zur Einlagerung in z.B. Banknoten zu bilden. Die durch die Aussparungen 20 in der Reflexionsschicht R gebildeten Schriftzeichen "PL" sind bei einem in eine Banknote eingelagerten Sicherheitsfaden im Auflicht kaum erkennbar, im Durchlicht dagegen als Negativschrift wahrnehmbar.

Sicherheitsfäden mit dem in den Figuren 7 und 8 beschriebenen Aufbau sind besonders geeignet zur Verwendung als Fenstersicherheitsfaden, der so in ein Dokument eingelagert ist, dass er zumindest stellenweise direkt sichtbar ist bzw. an der Oberfläche erscheint. Dies ist in Figur 9 am Beispiel eines Querschnitts durch eine Banknote 300 dargestellt Verfahren zur Einbettung des Sicherheitsfadens 200 im Papier unter Fensterbildung im Sicherheitsfadenbereich sind z.B. in der DE-A-36 01114 beschrieben. Bei einem derart eingelagerten Faden ist bei Betrachtung im Auflicht im Fensterbereich vorwiegend die Beugungsstruktur oder Reflexionsmuster sichtbar, während bei Betrachtung im Durchlicht die in der Metallbeschichtung vorliegende Negativbeschriftung dominiert. In beiden Fällen bleibt der durch den Interferenzschichtaufbau hervorgerufene Farbkippeffekt wahrnehmbar.

Das erfindungsgemäße Sicherheitselement kombiniert somit in seiner einfachsten Ausführungsform drei Sicherheitsmerkmale in optimaler Weise miteinander, nämlich einerseits einen Farbkippeffekt in Kombination mit einer optimal reflektierenden Metallschicht, deren elektrische Leitfähigkeit ein zweites Sicherheitsmerkmal bildet, und schließlich ein magnetisches Sicherheitsmerkmal, dessen Eigenschaften optimal eingestellt werden können, ohne die übrigen Sicherheitsmerkmale negativ zu beeinflussen.

Weitere Sicherheitsmerkmale lassen sich mit dem erfindungsgemäßen Sicherheitselement kombinieren, beispielsweise durch teilweises Entfernen der Magnetschicht zur Bildung einer Codierung, beispielsweise eines Barcodes, sowie durch Kombination mit Beugungsstrukturen, insbesondere in Form einer geprägten Struktur, vorzugsweise angrenzend an die ohnehin vorhandene Reflexionsschicht R.

Ein bevorzugter Anwendungsbereich des erfindungsgemäßen Sicherheitselements wurde zuvor bereits angegeben als Sicherheitsfaden, insbesondere als maschinenlesbarer magnetischer Hologrammfenstersicherheitsfaden mit Farbkippeffekt und Negativschrift. Das Sicherheitselement kann aber auch als Streifen oder Flächenelement auf einen Gegenstand, insbesondere ein Wertpapier, vorzugsweise eine Banknote, aufgeklebt werden oder auf andere Weise mit oder ohne das Substrat, beispielsweise im Hot-Stamp-Verfahren, auf einen Gegenstand übertragen werden.

## Patentansprüche

1. Sicherheitselement (1, 200) für Gegenstände, insbesondere für Wertdokumente (200) wie Banknoten und Kreditkarten, umfassend mehrere übereinander liegende Schichten (I, R, M), nämlich mindestens ein einen Farbkippeffekt erzeugendes Interferenzeleme (I) und eine Schicht (M) mit magnetischen Eigenschaften, wobei eine Reflexionsschicht (R) zwischen der Schicht (M) mit magnetischen Eigenschaften und dem mindestens einen Interferenzelement (I) angeordnet ist und wobei die Schicht (M) mit magnetischen Eigenschaften und die Reflexionsschicht Aussparungen (10, 20) in Form von Zeichen oder Mustern oder Codierungen besitzt.

2. Sicherheitselement nach Anspruch 1, wobei die Aussparungen (10) in der Schicht (M) mit magnetischen Eigenschaften größer sind als die Aussparungen (20) in der Reflexionsschicht (R) und eine maschinenlesbare Codierung (11) bilden.

3. Sicherheitselement nach Anspruch 1 oder 2, umfassend Beugungsstrukturen.

4. Sicherheitselement nach wenigstens einem der Ansprüche 1 bis 3, umfassend ein Substrat (S), auf welchem die Schichten (I, R, M) vorliegen.

5. Sicherheitselement nach Anspruch 4, wobei das Substrat (S) mit Beugungsstrukturen (2) ausgestattet ist.

6. Sicherheitselement nach Anspruch 5, wobei die Beugungsstrukturen (2) in eine Oberfläche des Substrats (S) geprägt sind.

7. Sicherheitselement nach Anspruch 3, wobei die Beugungsstrukturen (2) in eine zusätzliche Schicht integriert sind.

8. Sicherheitselement nach wenigstens einem der Ansprüche 3 bis 7, wobei die Reflexionsschicht (R) an die Beugungsstrukturen (2) angrenzt.

9. Sicherheitselement nach wenigstens einem der Ansprüche 3 bis 7, wobei das Interferenzelement (I) eine Absorberschicht (A) umfasst und diese an die Beugungsstrukturen angrenzt.

10. Sicherheitselement nach wenigstens einem der Ansprüche 1 bis 9, wobei das Sicherheitselement als Sicherheitsfaden (200) ausgebildet ist.

11. Sicherheitselement nach wenigstens einem der Ansprüche 1 bis 9, wobei das Sicherheitselement als Flächenelement oder Streifen zur Applikation auf Gegenstände, insbesondere Wertpapiere, ausgebildet ist.

12. Sicherheitselement nach Anspruch 11, wobei das Sicherheitselement als Transferelement ausgebildet ist.

13. Gegenstand, umfassend ein Sicherheitselement (1) nach wenigstens einem der Ansprüche 1 bis 12.

14. Gegenstand nach Anspruch 13, wobei der Gegenstand ein Wertdokument (300) ist.

15. Gegenstand nach Anspruch 14, wobei das Sicherheitselement ein Sicherheitsfaden (200) ist.

16. Gegenstand nach Anspruch 15, wobei der Sicherheitsfaden (200) in dem Wertdokument (300) als Fensterfaden eingelagert ist.

17. Gegenstand nach Anspruch 13 oder 14, wobei das Sicherheitselement (1) auf den Gegenstand appliziert ist.

18. Gegenstand nach wenigstens einem der Ansprüche 13 bis 17, wobei der Gegenstand eine Banknote (300) ist.

19. Verfahren zur Herstellung eines Sicherheitselements nach wenigstens einem der Ansprüche 1 bis 12, umfassend die Schritte:
- zur Verfügungstellen eines Substrats (S),
- Beschichten des Substrats (S) mit mindestens einem Interferenzelement (I), mit einer Schicht (M) mit magnetischen Eigenschaften und mit einer Reflexionsschicht (R) derart, dass die reflektierende Metallschicht (R) zwischen der Schicht (M) mit magnetischen Eigenschaften und dem mindestens einen Interferenzelement (I) liegt, wobei durch teilweises Entfernen der reflektierenden Metallschicht (R) und der Schicht (M) mit magnetischen Eigenschaften transparente Bereiche (20) in Form von Zeichen, Mustern oder Codierungen erzeugt werden.

20. Verfahren nach Anspruch 19, wobei eine Beugungsstruktur (2) in oder auf das Substrat (S) oder eine zusätzliche Schicht eingebracht, insbesondere geprägt, wird.

21. Verfahren nach Anspruch 19 oder 20, wobei die Schichten in einem Aufdampfungsverfahren erzeugt werden.

22. Verfahren nach wenigstens einem der Ansprüche 19 bis 21, wobei die Schichten (I, R, M) einseitig auf das Substrat (S) aufgebracht werden.

23. Verfahren nach Anspruch 19, wobei von der Schicht (M) mit magnetischen Eigenschaften größere Bereiche entfernt werden als von der Metallschicht (R), so dass die Schicht (M) mit magnetischen Eigenschaften eine von den semitransparenten Bereichen (20) verschiedene maschinenlesbare Codierung (11) bildet.

24. Verfahren zur Herstellung eines Gegenstandes mit einem Sicherheitselement (1) nach wenigstens einem der Ansprüche 1 bis 12, wobei das Sicherheitselement (1) nach wenigstens einem der Ansprüche 19 bis 23 hergestellt wird und das so hergestellte Sicherheitselement auf einen Gegenstand appliziert wird.

25. Verfahren zur Herstellung eines Gegenstandes mit einem Sicherheitselement (1) nach wenigstens einem der Ansprüche 1 bis 12, wobei das Sicherheitselement nach wenigstens einem der Ansprüche 19 bis 23 hergestellt wird und wobei das so hergestellte Sicherheitselement (1) in Papier eingelagert wird.

26. Verfahren nach Anspruch 25, wobei das Sicherheitselement (1) in das Papier nach Art eines Fensterfadens eingelagert wird.

## Claims

1. A security element (1, 200) for objects, in particular for value documents (200) such as bank notes and credit cards, comprising a plurality of superposed layers (I, R, M), namely at least one interference element (I) producing a color shift effect and a layer (M) with magnetic properties, wherein a reflecting layer (R) is disposed between the layer (M) with magnetic properties and the at least one interference element (I), and wherein the layer (M) with magnetic properties and the reflecting layer possess gaps (10, 20) in the form of characters or patterns or codings.

2. The security element according to claim 1, wherein the gaps (10) in the layer (M) with magnetic properties are larger than the gaps (20) in the reflecting layer (R) and form a machine-readable coding (11).

3. The security element according to claim 1 or 2, comprising diffraction structures.

4. The security element according to at least one of claims 1 to 3, comprising a substrate (S), on which the layers (I, R, M) are present.

5. The security element according to claim 4, wherein the substrate (S) is equipped with diffraction structures (2).

6. The security element according to claim 5, wherein the diffraction structures (2) are embossed in a surface of the substrate (S).

7. The security element according to claim 3, wherein the diffraction structures (2) are integrated in an additional layer.

8. The security element according to at least one of claims 3 to 7, wherein the reflecting layer (R) adjoins the diffraction structures (2).

9. The security element according to at least one of claims 3 to 7, wherein the interference element (I) comprises an absorber layer (A), and the latter adjoins the diffraction structures.

10. The security element according to at least one of claims 1 to 9, wherein the security element is configured as a security thread (200).

11. The security element according to at least one of claims 1 to 9, wherein the security element is configured as a surface element or stripe for application to objects, in particular papers of value.

12. The security element according to claim 11, wherein the security element is configured as a transfer element.

13. An object comprising a security element (1) according to at least one of claims 1 to 12.

14. The object according to claim 13, wherein the object is a value document (300).

15. The object according to claim 14, wherein the security element is a security thread (200).

16. The object according to claim 15, wherein the security thread (200) is embedded in the value document (300) as a windowed thread.

17. The object according to claim 13 or 14, wherein the security element (1) is applied to the object.

18. The object according to at least one of claims 13 to 17, wherein the object is a bank note (300).

19. A method for producing a security element according to at least one of claims 1 to 12, comprising the following steps of:
- providing a substrate (S),
- coating the substrate (S) with at least one interference element (I), with a layer (M) with magnetic properties and with a reflecting layer (R) in such a way that the reflecting metal layer (R) is located between the layer (M) with magnetic properties and the at least one interference element (I), wherein transparent areas (20) in the form of characters, patterns or codings are produced by partial removal of the reflecting metal layer (R) and the layer (M) with magnetic properties.

20. The method according to claim 19, wherein a diffraction structure (2) is incorporated, in particular embossed, in or on the substrate (S) or an additional layer.

21. The method according to claim 19 or 20, wherein the layers are produced by a vapor deposition method.

22. The method according to at least one of claims 19 to 21, wherein the layers (I, R, M) are applied to the substrate (S) on one side.

23. The method according to claim 19, wherein larger areas are removed from the layer (M) with magnetic properties than from the metal layer (R), so that the layer (M) with magnetic properties forms a machine-readable coding (11) different from the semitransparent areas (20).

24. A method for producing an object with a security element (1) according to at least one of claims 1 to 12, wherein the security element (1) is produced according to at least one of claims 19 to 23, and the thus produced security element is applied to an object.

25. A method for producing an object with a security element (1) according to at least one of claims 1 to 12, wherein the security element is produced according to at least one of claims 19 to 23, and wherein the thus produced security element (1) is embedded in paper.

26. The method according to claim 25, wherein the security element (1) is embedded in the paper in the manner of a windowed thread.

## Revendications

1. Elément de sécurité (1, 200) pour objets, notamment pour documents de valeur (200) tels que billets de banque et cartes de crédit, comprenant plusieurs couches superposées (I, R, M), à savoir au moins un élément d'interférence (1) produisant un effet changeant des couleurs par basculement et une couche (M) ayant des propriétés magnétiques, une couche réfléchissante (R) étant disposée entre la couche (M) aux propriétés magnétiques et le au moins un élément d'interférence (1), et la couche (M) aux propriétés magnétiques ainsi que la couche réfléchissante ayant des évidements (10, 20) sous forme de signes, de motifs ou de codages.

2. Elément de sécurité selon la revendication 1, les évidements (10) pratiqués dans la couche (M) aux propriétés magnétiques étant plus grands que les évidements (20) pratiqués dans la couche réfléchissante (R) et constituant un codage (11) lisible par machine.

3. Elément de sécurité selon la revendication 1 ou 2, comprenant des structures de diffraction.

4. Elément de sécurité selon au moins une des revendications de 1 à 3, comprenant un substrat (S) sur lequel sont disposées les couches (I, R, M).

5. Elément de sécurité selon la revendication 4, le substrat (S) étant pourvu de structures de diffraction (2).

6. Elément de sécurité selon la revendication 5, les structures de diffraction (2) étant estampées dans une surface du substrat (S).

7. Elément de sécurité selon la revendication 3, les structures de diffraction (2) étant intégrées dans une couche supplémentaire.

8. Elément de sécurité selon au moins une des revendications de 3 à 7, la couche réfléchissante (R) étant adjacente aux structures de diffraction (2).

9. Elément de sécurité selon au moins une des revendications de 3 à 7, l'élément d'interférence (1) comprenant une couche d'absorption (A), laquelle étant adjacente aux structures de diffraction.

10. Elément de sécurité selon au moins une des revendications de 1 à 9, l'élément de sécurité étant réalisé sous forme d'un fil de sécurité (200).

11. Elément de sécurité selon au moins une des revendications de 1 à 9, l'élément de sécurité étant réalisé sous forme d'élément surfacique ou bande pour une application sur des objets, notamment sur des documents de valeur.

12. Elément de sécurité selon la revendication 11, l'élément de sécurité étant réalisé sous forme d'élément de transfert.

13. Objet comprenant un élément de sécurité (1) selon au moins une des revendications de 1 à 12.

14. Objet selon la revendication 13, l'objet étant un document de valeur (300).

15. Objet selon la revendication 14, l'élément de sécurité étant un fil de sécurité (200).

16. Objet selon la revendication 15, le fil de sécurité (200) étant inséré en tant que fil de fenêtre dans le document de valeur (300).

17. Objet selon la revendication 13 ou 14, l'élément de sécurité (1) étant appliqué sur l'objet.

18. Objet selon au moins une des revendications de 13 à 17, l'objet étant un billet de banque (300).

19. Procédé de fabrication d'un élément de sécurité selon au moins une des revendications de 1 à 12, comprenant les étapes:
- mise à disposition d'un substrat (S),
- application sur le substrat (S) d'un revêtement consistant au moins en un élément d'interférence (I), en une couche (M) ayant des propriétés magnétiques et en une couche réfléchissante (R), de telle manière que la couche métallique réfléchissante (R) est disposée entre la couche (M) aux propriétés magnétiques et le au moins un élément d'interférence (I), des zones transparentes (20) sous forme de signes, de motifs et de codages étant créées en enlevant partiellement la couche métallique réfléchissante (R) et la couche (M) aux propriétés magnétiques.

20. Procédé selon la revendication 19, une structure de diffraction (2) étant mise en place dans ou sur le substrat (S) ou bien dans ou sur une couche supplémentaire, notamment par estampage.

21. Procédé selon la revendication 19 ou 20, les couches étant produites lors d'un processus de métallisation.

22. Procédé selon au moins une des revendications de 19 à 21, les couches (I,R,M) étant appliquées uniquement d'un côté du substrat (S).

23. Procédé selon la revendication 19, de plus amples zones étant retirées de la couche (M) aux propriétés magnétiques que de la couche métallique (R), de telle manière que la couche (M) aux propriétés magnétiques forme un codage (11) lisible par machine différent des zones semi-transparentes (20).

24. Procédé de fabrication d'un objet comprenant un élément de sécurité (1) selon au moins une des revendications de 1 à 12, l'élément de sécurité (1) étant produit selon au moins une des revendications de 19 à 23, et l'élément de sécurité ainsi produit étant appliqué sur un objet.

25. Procédé de fabrication d'un objet comprenant un élément de sécurité (1) selon au moins une des revendications de 1 à 12, l'élément de sécurité étant produit selon au moins une des revendications de 19 à 23, et l'élément de sécurité (1) ainsi produit étant inséré dans du papier.

26. Procédé selon la revendication 25, l'élément de sécurité (1) étant inséré dans le papier à la façon d'un fil de fenêtre.
